Europäisches Patentamt

European Patent Office

Office européen des brevets

(11) Veröffentlichungsnummer : **0 361 061 B1**

(12) **EUROPÄISCHE PATENTSCHRIFT**

(45) Veröffentlichungstag der Patentschrift :
**08.04.92 Patentblatt 92/15**

(51) Int. Cl.⁵ : **C01B 21/068**

(21) Anmeldenummer : **89115213.4**

(22) Anmeldetag : **18.08.89**

(54) **Siliciumnitridpulver mit verbesserten Oberflächeneigenschaften sowie Verfahren zu deren Herstellung.**

(30) Priorität : **31.08.88 DE 3829504**

(43) Veröffentlichungstag der Anmeldung :
**04.04.90 Patentblatt 90/14**

(45) Bekanntmachung des Hinweises auf die
Patenterteilung :
**08.04.92 Patentblatt 92/15**

(84) Benannte Vertragsstaaten :
**DE FR GB IT SE**

(56) Entgegenhaltungen :
**EP-A- 0 251 322**
**JOURNAL OF MATERIALS SCIENCE, Band 22,**
**1987, Seiten 3717-3720, Chapman and Hall Ltd,**
**London, GB; M. PEUCKERT et al.: "Oxygen**
**distribution in silicon nitride powders"**
**CHEMICAL ABSTRACTS, Band 107, Nr. 14, 5.**
**Oktober 1987, Seite 130, Zusammenfassung**
**Nr. 117860z, Columbus, Ohio, US; & JP-A-62**
**143 805 (TOYO SODA Mfg. CO., LTD) 27-**
**06-1987**

(56) Entgegenhaltungen :
**JOURNAL OF THE AMERICAN CERAMIC SO-**
**CIETY, Band 71, Nr. 4, April 1988, Seiten C-183**
**- C-184; L.A.G. HERMANSSON et al.:**
**"High-temperature behavior of chemically tre-**
**ated silicon nitride powders"**
**AM. CERAM. SOC. BULL., Band 58, Nr. 11,**
**1980, Seiten 1155-1156, Columbus, Ohio, US;**
**C. GRESKOVICH et al.: "Controlling the oxy-**
**gen content of Si3N4 powders"**
**KERAMISCHE ZEITSCHRIFT, Band 40, Nr. 2,**
**Februar 1988, Seiten 90-96, Freiburg, DE; B.**
**HOFFMANN: "Probleme der Feinstpulverher-**
**stellung für Mechanokeramik durch mechani-**
**sche Aufbereitung"**

(73) Patentinhaber : **BAYER AG**
**W-5090 Leverkusen 1 Bayerwerk (DE)**

(72) Erfinder : **Pitzer, Ulrike, Dr.**
**Doerperhofstrasse 39**
**W-4150 Krefeld (DE)**
Erfinder : **Franz, Gerhard, Dr.**
**Erich-Klausener-Strasse 44**
**W-4150 Krefeld (DE)**
Erfinder : **Laubach, Benno, Dr.**
**Bodelschwinghstrasse 22**
**W-4150 Krefeld (DE)**

EP 0 361 061 B1

## Beschreibung

Die vorliegende Erfindung betrifft $Si_3N_4$-Pulver mit einem Gesamtsauerstoffgehalt von kleiner als 1,8 Gew.-%, wobei der Anteil an Oberflächensauerstoffgehalt mehr als 65 % des Gesamtsauerstoffgehaltes beträgt sowie Verfahren zur Herstellung dieser Pulver.

Siliciumnitridpulver weisen alle einen gewissen Gehalt an Sauerstoff auf. Je nach Anwendungsbereich beträgt der Sauerstoffgehalt zwischen ca. 0,8 und 2,5 Gew.-%. Obwohl der Sauerstoff eigentlich eine Verunreinigung des Pulvers darstellt, wird er doch in begrenztem Umfang als notwendig angesehen, um die Sinteraktivität des Siliciumnitridpulvers zu verbessern (G.Ziegler, J.Heinrich, G.Wötting, J. Mater Sci. 22 (1987), 3041-86).

Üblicherweise werden dem Siliciumnitridpulver Sinteradditive zugesetzt, die zusammen mit dem im Pulver vorliegenden Sauerstoff bei der Sintertemperatur flüssige Phasen bilden und erst eine Verdichtung des Materials ermöglichen. Der Sauerstoffgehalt im Siliciumnitridpulver sollte jedoch nicht zu hoch sein, da ein hoher Sauerstoffgehalt die Glastemperatur der bei der Sinterung gebildeten Sekundärphasen erniedrigt und damit die mechanischen Eigenschaften des daraus hergestellten Sinterformkörpers bei hohen Temperaturen verschlechtert. Insgesamt wird für die Gasdrucksinterung ein Sauerstoffgehalt von ca. 1,5 Gew.-% als optimal betrachtet. Zum heißisostatischen Pressen kann der Sauerstoffgehalt jedoch auch niedriger liegen. Grenzwerte für den zum heißisostatischen Pressen notwendigen Sauerstoff sind nicht bekannt.

In J. Mater. Sci. 22 (1987), 3717-3720, wird die Sauerstoffverteilung in kommerziellen $Si_3N_4$-Pulvern mit ESCA (Electron Spectroscopy for Chemical Analysis) beschrieben. Es wird ausgeführt, daß der Sauerstoffgehalt im Teilcheninneren reduziert werden sollte. Bei einem gewünschten Gesamtsauerstoffgehalt von 1,5 Gew.-% bedeutet das eine Anreicherung des Sauerstoffs an der Teilchenoberfläche. Nach obengenannter Literatur ist die Sauerstoffverteilung zwischen Teilcheninnerem und der Teilchenoberfläche stark vom Herstellungsverfahren abhängig. $Si_3N_4$-Pulver, die durch Nitridierung von Silicium oder reduktive Nitridierung von $SiO_2$ hergestellt wurden, zeigen nur eine geringe Anreicherung von Sauerstoff an der Pulveroberfläche. Der Anteil an Oberflächensauerstoff liegt zwischen 17 % und 58 % des Gesamtsauerstoffgehaltes. Bei dem durch Gasphasenreaktion von $SiCl_4$ und $NH_3$ bei Raumtemperatur hergestellten Pulvers (Toyo Soda TS 7) liegt der Oberflächensauerstoffgehalt schon bei 60 %. Noch höher ist die Sauerstoffanreicherung an der Oberfläche mit 83 % bei dem $Si_3N_4$-Pulver, das durch Flüssigphasenreaktion zwischen $SiCl_4$ und $NH_3$ und anschließende thermische Zersetzung des Diimids erhalten wurde (Ube E 10). Dieses Pulver weist aber einen naßchemisch bestimmten Gesamtfluorgehalt von über 35 ppm auf. Bei ESCA-Untersuchungen beträgt der Fluorgehalt an der Pulveroberfläche ca. 0,3 At.-%. Fluor verschlechtert jedoch die Hochtemperaturfestigkeit der aus dem Pulver gesinterten Teile, da Fluor ebenso wie Sauerstoff die Glastemperatur der Sekundärphasen beeinflußt (L.A.G.Hermansson, M.Burström, T.Johansson, M.E.Hatcher, J. Amer. Ceram. Soc. 71 (4) (1988), C183-184).

Abgesehen vom generellen Pulverherstellungsverfahren gibt es mehrere Aufbereitungswege, mit denen der Sauerstoffgehalt an der Pulveroberfläche eingestellt werden kann. Zum einen kann das Pulver durch Glühen bei Temperaturen über 500°C an Luft anoxidiert werden (C.Greskovich, J.A.Palm, Am. Ceram. Soc. Bull. 59(11) (1980), 1155). Die Oxidation setzt an der Pulveroberfläche ein, wodurch der Oberflächensauerstoffgehalt erhöht werden kann. Dies führt jedoch zu einer Erhöhung des Sauerstoffgehaltes auf über 1,8 Gew.-% und damit, wie oben beschrieben, zu einer Verschlechterung der Hochtemperatureigenschaften. Denselben Nachteil hat das Verfahren, den Oberflächensauerstoffgehalt durch Hydrolyse zu erhöhen. Bei der Mahlung von kommerziellem $Si_3N_4$-Pulver mit niedrigem Oberflächensauerstoffgehalt in Wasser oder in Alkohol wird zwar durch die Hydrolyse eine sauer stoffreiche Oberflächenschicht gebildet, gleichzeitig jedoch der Gesamtsauerstoffgehalt auf einen Wert über 1,8 Gew.-% erhöht.

Geht man von Pulvern mit einer stark sauerstoffhaltigen Oberfläche aus, die z.B. durch Mahlung in Wasser hergestellt wurden, lassen sich daraus durch Laugung mit HF die Gesamtsauerstoffgehalte erniedrigen. Durch Optimierung kann man zu einem Pulver mit einem hohen Oberflächensauerstoffgehalt bei einem Gesamtsauerstoffgehalt von kleiner als 1,8 Gew.-% gelangen. Dieses Verfahren hat jedoch den Nachteil, daß Spuren von Fluoridionen im Pulver zurückbleiben, die dem Verfahren entsprechend an der Pulveroberfläche angereichert sind. Diese Spuren können nicht durch Waschen entfernt werden.

Aufgabe dieser Erfindung ist es nunmehr, $Si_3N_4$-Pulver zur Verfügung zu stellen, die die beschriebenen Nachteile des Standes der Technik nicht aufweisen.

Es wurde nun gefunden, daß es möglich ist, Siliciumnitridpulver bereitzustellen, bei denen der Oberflächensauerstoffgehalt auf einen hohen Wert angereichert ist, ohne daß gleichzeitig der Gesamtsauerstoffgehalt über 1,8 Gew.-% ansteigt und ohne daß störende Fluoridionen in der Hülle vorliegen. Diese $Si_3N_4$-Pulver weisen einen Gesamtsauerstoffgehalt von kleiner als 1,8 Gew.-% auf, wobei der Anteil an Oberflächensauerstoffgehalt mehr als 65 % des Gesamtsauerstoffgehaltes beträgt, ihr Fluorgehalt ist kleiner als 35 ppm. Diese $Si_3N_4$-Pulver sind Gegenstand dieser Erfindung. Besonders bevorzugt sind die erfindungsgemäßen $Si_3N_4$-Pulver, bei denen

der Fluorgehalt an der Oberfläche des $Si_3N_4$-Pulvers kleiner als 0,1 At.-% beträgt.

Zu diesen erfindungsgemäßen $Si_3N_4$-Pulvern kann man gelangen, wenn man von einem Pulver ausgeht, welches einen extrem geringen Gesamtsauerstoffgehalt aufweist. Solche Pulver sowie Verfahren zu deren Herstellung sind Gegenstand der gleichzeitig entnommenen deutschen Patentanmeldung DE-A-3 829 503 . Die dafür eingesetzten $Si_3N_4$-Ausgangspulver sollten einen Sauerstoffgehalt von weniger oder gleich 0,4 Gew.-% aufweisen.

Gegenstand dieser Erfindung sind auch Verfahren zur Herstellung der erfindungsgemäßen $Si_3N_4$-Pulver. Ein mögliches erfindungsgemäßes Verfahren ist dadurch gekennzeichnet, daß $Si_3N_4$-Pulver mit einem Gesamtsauerstoffgehalt von kleiner oder gleich 0,4 Gew.-% bei Temperaturen von 700°C bis 1200°C und Zeiten zwischen 15 Min. und 90 Min. in sauerstoffhaltiger Atmosphäre geglüht wird. Liegt der Gesamtsauerstoffgehalt höher als 0,4 Gew.-%, sind die nachfolgenden Schritte nur noch unter erheblichem technischen Aufwand so kontrollierbar, daß der geforderte Endsauerstoffgehalt 1,8 Gew.-% nicht mehr übersteigt, insbesondere wenn es sich um sehr feinteilige und damit reaktive Pulver handelt.

Da Siliciumnitrid thermodynamisch instabil gegenüber Siliciumdioxid ist, war zu erwarten, daß gerade Siliciumnitridpulver mit einem geringen Sauerstoffgehalt sehr leicht oxidiert und hydrolysiert werden können, bis eine Passivierungsschicht die Reaktion nach einiger Zeit etwas hemmt. Überraschenderweise wurde jedoch gefunden, daß Pulver mit einem Gesamtsauerstoffgehalt von kleiner oder gleich 0,4 Gew.-% gegenüber Oxidation und Hydrolysereaktionen sehr träge reagieren, so daß man bei ihnen auf technisch einfache Weise den Sauerstoffgehalt an der Oberfläche definiert anreichern kann. Sind beim erfindungsgemäßen Verfahren die Zeiten zu kurz bzw. die Temperaturen zu niedrig, ist die Anreicherung an Oberflächensauerstoff zu gering. Sind die Zeiten zu lang bzw. die Temperaturen zu hoch, kann der Sauerstoffgehalt auf über 1,8 Gew.-% ansteigen. Je nach Sauerstoffgehalt des Ausgangsmaterials müssen daher Zeit und Temperatur optimiert werden, um zu dem gewünschten $Si_3N_4$-Pulver zu gelangen, bei dem bei einem Gesamtsauerstoffgehalt von kleiner als 1,8 Gew.-% der Anteil an Oberflächensauerstoff mehr als 65 % des Gesamtsauerstoffgehaltes beträgt und gleichzeitig der Fluorgehalt kleiner als 35 ppm, insbesondere der Fluorgehalt an der Pulveroberfläche kleiner als 0,1 At.-% ist.

In einer weiteren bevorzugten Ausführungsform läßt sich das erfindungsgemäße Pulver dadurch herstellen, daß man $Si_3N_4$-Pulver mit einem Sauerstoffgehalt von kleiner oder gleich 0,4 Gew.-% in Wasser und/oder Alkoholen zwischen 15 Min. und 120 Min. mahlt. Üblicherweise werden $Si_3N_4$-Pulver nicht in Wasser, sondern in organischen Lösungsmitteln gemahlen, da sonst der Sauerstoffgehalt auf einen zu hohen Wert ansteigt (B. Hoffmann, Keramische zeitschrift 40(2) (1988), 90-96). Geht man jedoch von den Pulvern mit sehr niedrigem Sauerstoffgehalt aus, läßt sich durch Optimierung der Mahldauer ein definierter Sauerstoffgehalt an der Pulveroberfläche einstellen, ohne daß der Gesamtsauerstoffgehalt auf über 1,8 Gew.-% ansteigt.

Die spezifische Oberfläche BET der erfindungsgemäßen Pulver wird nach DIN 66131, Stickstoff 1-Punkt-Adsorptionsmethode bestimmt.

Der Gesamtsauerstoffgehalt der $Si_3N_4$-Pulver wird nach der Methode der Heißextraktion im inerten Trägergasstrom ermittelt. Dabei wird eine $Si_3N_4$-Probe in einen Graphittiegel eingewogen und in einem Heliumstrom auf über 1800°C erhitzt. Der in der Probe enthaltene Sauerstoff wird dabei zu CO umgesetzt, das mit Hilfe einer IR-Meßzelle quantitativ bestimmt wird.

Zur Bestimmung des Gesamtfluorgehaltes werden die Pulverproben in einer alkalischen Schmelze aufgeschlossen. Das gebildete Fluorid wird in einer Wasserdampfdestillationsapparatur abdestilliert und der Fluorid-Gehalt quantitativ mit einer Fluoridionen-sensitiven Elektrode gemessen.

Der Fluorgehalt an der Pulveroberfläche läßt sich über ESCA aus der Peakintensität des F 1 s-Peaks, dividiert durch den atomaren Empfindlichkeitsfaktor für Fluor, quantitativ ermitteln (Practical Surface Analysis by Anger and X-ray Photo-Electron-Spectroscopy; Ed. D. Briggs, M. P. Seak, Willy and Sons, New York (1983)).

Der Anteil an Oberflächensauerstoff im Verhältnis zum Gesamtsauerstoff wird nach dem von Peuckert und Greil (J. Mater. Sci. 22 (1987), 3717-3720) beschriebenen Verfahren mit ESCA bestimmt. Dabei werden mit ESCA die mit den atomaren Empfindlichkeitsfaktoren korrigierten Peakintensitäten des O 1 s und des N 1 s-Peaks ($I_N$ bzw. $I_O$) gemessen, durch $I_N{}^0$ bzw $I_O{}^0$ (theoretische Signalintensitäten, die sich bei reinem $SiO_2$ bzw. $Si_3N_4$ ergeben würden; $I_N{}^0/I_O{}^0$ wurde zu 1,03 berechnet) dividiert und daraus die ESCA-Oxidschichtdicke $d_{XPS}$ über folgende Formel bestimmt:

$$d_{XPS} = m \ln \left[ \frac{I_O \times I_N{}^0}{I_O{}^0 \times I_N} + 1 \right] ,$$

wobei m die mittlere Austrittstiefe (unter den gegebenen Bedingungen ist m = 1,2 nm) ist. Aus der spezifischen Oberfläche BET (in m²/g) läßt sich ein mittlerer Teilchendurchmesser Ds berechnen nach der Formel:

$$Ds = \frac{6}{\rho Si_3N_4 \times BET} = \frac{1{,}887 \times 10^{-6}}{BET} \ (m).$$

Aus dem mittleren Teilchendurchmesser Ds und dem Gesamtsauerstoffgehalt $C_O$ (Gew.-%) läßt sich eine fiktive Oberflächensauerstoffschicht $d_s$ bestimmen, die sich ergeben würde, wenn der gesamte Sauerstoff an der Pulveroberfläche gebunden wäre:

$$d_s = 1 - \left[ 1 - 0{,}026 \times C_O \right)^{1/3} \right] \times \frac{Ds}{2} \ .$$

Der prozentuale Anteil des Oberflächensauerstoffs, bezogen auf den Gesamtanteil des Sauerstoffs, läßt sich bestimmen, indem man das prozentuale Verhältnis von $d_{XPS}$ und $d_s$ bildet.

Die erfindungsgemäßen $Si_3N_4$-Pulver und Herstellungsverfahren sollen im folgenden anhand von Beispielen näher erläutert werden, ohne daß darin eine Einschränkung zu sehen ist.

Beispiel 1

12,3 g $Si_3N_4$-Pulver mit einem Gesamtsauerstoffgehalt von 0,22 Gew.-%, welches entsprechend dem Beispiel 2 der Patentanmeldung DE-A-3 829 503 erhalten wurde, wird in einem Röhrenofen unter Luft eine Stunde lang bei 1000°C geglüht. Die Gewichtszunahme ist dabei kleiner als 0,1 g. Die spezifische Oberfläche BET des geglühten Pulvers beträgt 4,0 m²/g. Nach der Heißextraktionsmethode wird der Gesamtsauerstoffgehalt zu 0,45 Gew.-% bestimmt. Der Fluorgehalt liegt unter 10 ppm. An der Pulveroberfläche ist mit ESCA kein Fluor nachweisbar (Nachweisgrenze ca. 0,1 At.-%.).

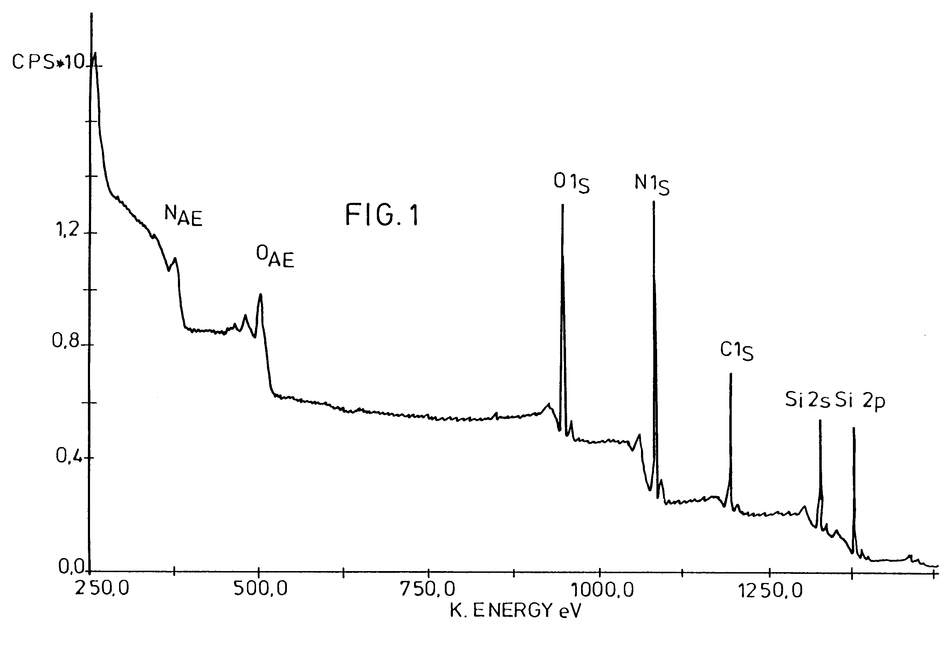

In Fig. 1 ist das ESCA-Spektrum der geglühten Probe dargestellt. Nach dem Verfahren von Peuckert und Greil (J. Mater. Sci. 22 (1987), 3717-3720) lassen sich daraus die in der Tabelle 1 angegebenen Werte berechnen:

Tabelle 1

Berechnung des prozentualen Anteils an Oberflächensauerstoff

| $I_O/I_N$ | $d_{XPS}$ [nm] | BET [m²/g] | Ds [µm] | $C_O$ [Gew.-%] | $d_s$ [nm] | $d_{XPS}/d_s$ [%] |
|---|---|---|---|---|---|---|
| 0,705 | 0,655 | 4,0 | 0,47 | 0,45 | 0,920 | 71 |

Der prozentuale Anteil des Oberflächensauerstoffs, bezogen auf den Gesamtanteil des Sauerstoffs, beträgt danach 71 %.

Beispiel 2

Durch Umsetzung von $SiCl_4$ mit $NH_3$ in der Gasphase und anschließender Entchlorierung wird ein amorphes $Si_3N_4$-Vorprodukt hergestellt. Dieses Vorprodukt hat eine BET von 135 m²/g. Innerhalb einer Zeit von 60 Min. werden 3 kg dieses amorphen Vorprodukts in ein Kristallisationsschiffchen gefüllt und anschließend 2 h lang bei einer Temperatur von 1500°C kristallisiert. Der Feuchtigkeitsgehalt der Atmosphäre bei der Handhabung liegt niedriger als 5 ppm. Das kristalline Produkt hat einen Sauerstoffgehalt von 0,27 Gew.-%.

700 g dieses $Si_3N_4$-Pulvers werden mit Stahlkugeln 70 Min. in 900 ml Wasser gemahlen. Der Eisenabrieb wird entfernt und das Pulver getrocknet. Die spezifische Oberfläche BET des gemahlenen Pulvers beträgt 13,3 m²/g. Der Gesamtsauerstoffgehalt wird zu 1,2 Gew.-% bestimmt. Der Gesamtfluorgehalt liegt unter 10 ppm. Mit ESCA ist an der Pulveroberfläche kein Fluor nachweisbar (Nachweisgrenze ca. 0,1 At.-%.).

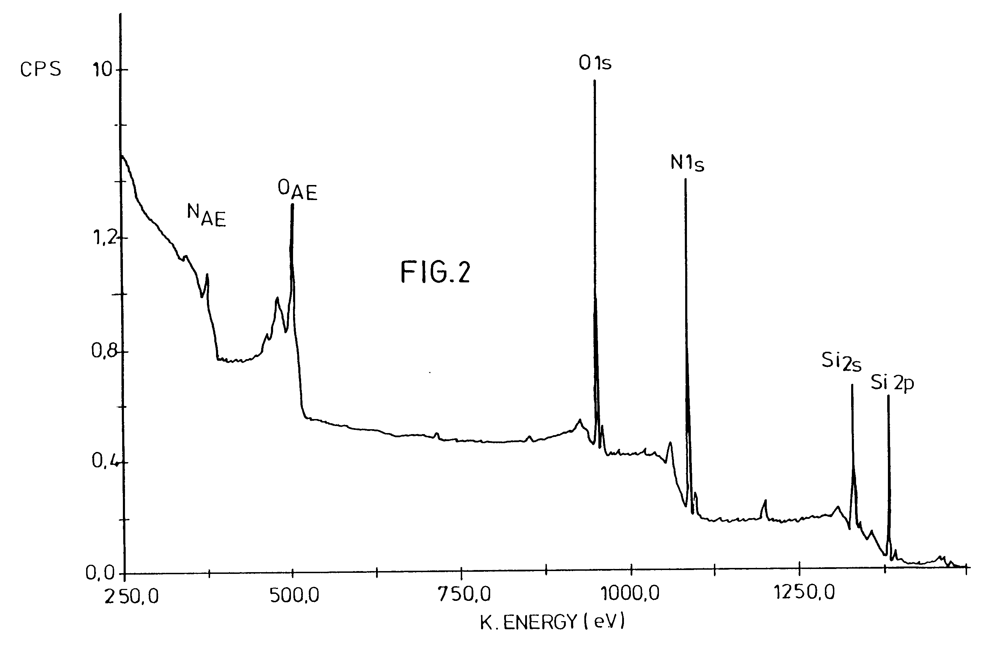

In Fig. 2 ist das ESCA-Spektrum der gemahlenen Probe dargestellt.

Nach dem Verfahren von Peuckert und Greil lassen sich die in Tabelle 2 angegebenen Werte ermitteln:

**Tabelle 2**

**Berechnung des prozentualen Anteils an Oberflächensauer-stoff**

| $I_O/I_N$ | $d_{XPS}$ [nm] | BET [$m^2/g$] | Ds [µm] | $C_O$ [Gew.-%] | $d_s$ [nm] | $d_{XPS}/d_s$ [%] |
|---|---|---|---|---|---|---|
| 0,537 | 0,528 | 13,3 | 0,142 | 1,2 | 0,746 | 71 |

Der prozentuale Anteil des Oberflächensauerstoffs, bezogen auf den Gesamtanteil des Sauerstoffs, beträgt danach 71 %.

**Patentansprüche**

1. $Si_3N_4$-Pulver mit einem Gesamtsauerstoffgehalt von kleiner als 1,8 Gew.-%, wobei der Anteil an Oberflächensauerstoffgehalt mehr als 65 % des Gesamtsauerstoffgehaltes beträgt, dadurch gekennzeichnet, daß der Fluorgehalt kleiner als 35 ppm ist.

2. $Si_3N_4$-Pulver gemäß Anspruch 1, dadurch gekennzeichnet, daß der Fluorgehalt an der Oberfläche des $Si_3N_4$-Pulvers kleiner als 0,1 At.-% beträgt.

3. Verfahren zur Herstellung von $Si_3N_4$-Pulver gemäß einem der Ansprüche 1 oder 2, dadurch gekennzeichnet, daß $Si_3N_4$-Pulver mit einem Gesamtsauerstoffgehalt von kleiner oder gleich 0,4 Gew.-% bei Temperaturen von 700°C bis 1200°C und Zeiten zwischen 15 Min. und 90 Min. in sauerstoffhaltiger Atmosphäre geglüht wird.

4. Verfahren zur Herstellung von $Si_3N_4$-Pulver gemäß einem der Ansprüche 1 oder 2, dadurch gekennzeichnet, daß $Si_3N_4$-Pulver mit einem Gesamtsauerstoffgehalt von kleiner oder gleich 0,4 Gew.-% in Wasser und/oder Alkoholen zwischen 15 Min. und 120 Min. gemahlen wird.

**Claims**

1. $Si_3N_4$ powder having a total oxygen content of less than 1.8% by weight, the surface oxygen content making up more than 65% of the total oxygen content, characterized in that the fluorine content is less than 35 ppm.

2. $Si_3N_4$ powder as claimed in claim 1, characterized in that the fluorine content at the surface of the $Si_3N_4$ powder is less than 0.1 at.- %.

3. A process for the production of the $Si_3N_4$ powder claimed in claim 1 or 2, characterized in that $Si_3N_4$ powder having a total oxygen content of or less than 0.4% by weight is calcined for 15 mins. to 90 mins. at temperatures of 700 to 1,200°C in an oxygen-containing atmosphere.

4. A process for the production of the $Si_3N_4$ powder claimed in claim 1 or 2, characterized in that $Si_3N_4$ powder having a total oxygen content of or less than 0.4% by weight is ground in water and/or alcohols for 15 to 120 mins.

**Revendications**

1. Poudre de $Si_3N_4$ ayant une teneur totale en oxygène inférieure à 1,8% en poids, la fraction de la teneur en oxygène de surface s'élevant à plus de 65% de la teneur totale en oxygène, caractérisée en ce que la teneur en fluor est inférieure à 35 ppm.

2. Poudre de $Si_3N_4$ suivant la revendication 1, caractérisée en ce que la teneur en fluor à la surface de la poudre de $Si_3N_4$ est inférieure à 0,1% en proportion atomique.

3. Procédé de production d'une poudre de $Si_3N_4$ suivant l'une des revendications 1 ou 2, caractérisé en ce que de la poudre de $Si_3N_4$ ayant une teneur totale en oxygène inférieure ou égale à 0,4% en poids est calcinée dans une atmosphère contenant de l'oxygène à des températures de 700°C à 1200°C et pendant des durées allant de 15 min à 90 min.

4. Procédé de production d'une poudre de $Si_3N_4$ suivant l'une des revendications 1 ou 2, caractérisé en ce que de la poudre de $Si_3N_4$ ayant une teneur totale en oxygène inférieure ou égale à 0,4% en poids est broyée dans l'eau et/ou des alcools pendant des durées comprises entre 15 et 120 min.

FIG. 1

FIG.2